# EUROPEAN PATENT APPLICATION

(11) **EP 0 992 673 A2**
(43) Date of publication of application: **12.04.2000**
(21) Application number: 99104454.6
(22) Date of filing: 05.03.1999
(51) Int. Cl.: F02M 21/02

(54) **Feed, implementation and control system for an internal combustion engine with injected gas feed**

(30) Priority: 08.10.1998 IT MI982167
(71) Applicant: Landi Renzo S.p.A., 42100 Reggio Emilia (IT)
(72) Inventor: Landi, Stefano, 42100 Reggio Emilia (IT)
(74) Representative: Giambrocono, Alfonso, Dr. Ing.

(57) **Abstract**

The feed, implementation and control system for an internal combustion engine of the petrol injection type which can also be alternatively fed with fuel gas when required, comprises a feed/implementation unit and a control unit (129) arranged to receive signals (132A-G) from sensors which measure the engine operating conditions. The feed/implementation unit comprises a pressure reducer (10) fed by the gas tank and of the type able to deliver gas at constant temperature and pressure independently of the feed pressure; a proportioning actuator (28) in which at least one communication port (30, 32) is provided between the outlet (22) of the pressure reducer (10) and the engine manifold (76) downstream of the throttle valve (64); first means (34, 36) controlled by the control unit being able to adjust the passage area of each port (30, 32) on the basis of the signals (132A-G) fed to the control unit by the sensors sensing the engine operating conditions, so as to feed the engine with an air/gas mixture ratio such as to give rise to reduced pollutant emissions from the engine; second means (148) for providing downstream of the proportioning actuator (28) a gas delivery pressure which depends on the pressure in the manifold (76) and is in any event close to atmospheric pressure; and third means (104) for causing immediate cessation of gas flow to the manifold (76) in the case of sudden accelerator release, and for blocking gas flow when the engine is switched off.

## Description

This invention relates to a feed, implementation and control system for an internal combustion engine of the petrol injection type which can also, when required, be injection-fed alternatively with fuel gas and in particular methane, L.P.G. (liquefied petroleum gas) or biogas.

Internal combustion engines of this type are used in motor vehicles, electrical generating units and the like.

In vehicles equipped with petrol-fed internal combustion engines comprising an electronically controlled injection system, the petrol is metered by a microprocessor device which normally uses information from a considerable number of sensors measuring the engine operating conditions.

In most cases the ignition system is also controlled to optimize the vehicle performance, this being achieved by said microprocessor device, which coordinates the injection system and ignition system. Converting the feed of this type of engine from petrol to fuel gas (methane, L.P.G. or biogas) requires the provision of a gas feed system comprising a pressure reducer for the gas originating from the relative tank. Downstream of this pressure reducer, in correspondence with the engine induction manifold, there is provided a venturi tube mixer which enables an air/gas mixture of suitable proportions to be obtained.

In known feed systems these proportions are stoichiometric, and hence optimized, only for a rather narrow range of engine r.p.m. The result is that during normal engine operation, the air/gas mixture ratio is hardly ever stoichiometric, because of which there is generally a fuel or air excess. Consequently the fuel is not burnt in optimum manner by the engine, so that this latter provides lower performance than that required, and in particular produces pollutant compounds which are discharged into the environment.

It is also known that temperature variations give rise to variations in the specific mass of the fuel gas and consequently to variations in the air/gas mixture ratio. In most engines of this type a certain range of mixture ratio variation is acceptable for thermodynamic reasons, but in this case it also gives rise to pollutant emissions, so considerably restricting the useful range of mixture ratio variation

Temperature control of the gas fed to the engine is therefore very important especially for L.P.G., and only slightly less important if methane gas is used,

It is in any event advantageous to feed the engine with fuel gas at virtually constant temperature, this facilitating good engine management, especially with regard to emissions.

The object of the invention is to obviate the aforesaid drawbacks by providing a feed, implementation and control system for an internal combustion engine injection-fed with fuel gas which enables in particular engine pollutant emission to be substantially reduced, with improved engine performance and reduced fuel gas consumption.

However, this object cannot be attained if the said venturi tube is retained in the system. Moreover, from the aforestated, the gas feed must be maintained at virtually constant temperature, and the pressure difference between the pressure reducer outlet and the manifold must be constant.

The said object is attained by the feed, implementation and control system of the present invention, comprising a feed/implementation unit and a control unit arranged to receive signals from sensors which measure the engine operating conditions, the feed/implementation unit comprising:
- a pressure reducer fed by the gas tank, of the two-stage type, provided with two reference chambers for the pressure in the induction manifold, and able to deliver gas at constant temperature and pressure independently of the feed pressure;
- a proportioning actuator in which at least one communication port is provided between the pressure reducer outlet and the engine manifold downstream of the throttle valve, first means controlled by the control unit being able to adjust the passage area of each port on the basis of signals fed to the control unit by the sensors which sense the engine operating conditions, so as to feed the engine with an air/gas mixture ratio giving rise to reduced engine pollutant emissions;
- second means for providing downstream of the proportioning actuator a gas delivery pressure which depends on the pressure in the manifold and is in any event close to atmospheric pressure;
- third means for causing immediate cessation of gas flow to the manifold in the case of sudden accelerator release, and for blocking gas flow when the engine is switched off.

A system of the aforesaid type enables the quantity of pollutant substances contained in the exhaust gas discharged by the engine to be reduced to a considerable extent compared with known systems of this type. In particular, it has been found that the most restrictive legal limits can be satisfied. It has also been found that a reduction in fuel gas consumption is achieved, together with improved engine performance.

As the system of this invention is normally added to an existing engine petrol operating system, the said control unit is conveniently in the form of an additional unit independent of the existing control unit for petrol operation. This does not mean that this latter cannot be replaced by a control unit performing both functions, or that a control unit for both functions cannot be included initially, at the engine design and construction stage.

Conveniently, said proportioning actuator has two ports, one of which is of considerably greater area than the other. The said first means for regulating the passage area of each port of the proportioning actuator conveniently consist of a needle insertable into the relative port, the cross-sectional area of the needle decreasing along it in the direction of the free end of the needle, with each needle there being associated a means (for example a stepping motor), controlled by the control unit, to vary the insertion of the needle into the relative port.

The most convenient pattern of variation in the cross-sectional area of the needle along its length can be chosen on the basis of experimental tests carried out on a specific engine, in such a manner as to approach as far as possible the required stoichiometric gas/air ratio of the mixture fed to the engine under any operating condition.

Said second means can conveniently comprise a single membrane pressure regulator in which a first overall cylindrical chamber communicating with the delivery duct is separated by an elastic membrane from a second chamber having substantially the same diameter as the first chamber and communicating with the outside, the membrane acting as a valving element for the gas exit aperture of the pressure regulator, it closing this exit aperture when the membrane is in its undeformed state.

The third means can comprise a cut-off valve arranged between the proportioning actuator and the pressure reducer, this valve comprising a first chamber communicating with the gas feed duct and separated from a second chamber by an elastic membrane which, when in its undeformed state, prevents the first chamber from communicating with the feed inlet of the proportioning actuator, in said membrane there being provided a hole, a by-pass connecting the second chamber to the feed inlet of the proportioning actuator, there being connected into the by-pass a valve controlled by the control unit.

However, the aforedescribed system has not given prompt dynamic response during the acceleration transients.

A further object of the invention is therefore to also obviate the aforesaid drawback.

This object is attained by providing a pipe which connects the pressure reducer pressure reference chambers to the induction manifold. In this manner the pressure of the gas delivered by the pressure reducer is maintained constant at a value exceeding the pressure in the induction manifold by a constant amount at all r.p.m. values. In addition, when the engine load increases the engine feed gas pressure increases, with consequent increase in the gas flow.

The invention will be more apparent from the ensuing description of one embodiment thereof. In this description reference is made to the accompanying drawings, on which:
Figure 1 is a very schematic view of a system of the invention;
Figure 2 shows a circuit scheme of the control unit of the device;
Figure 3 shows an operating flow diagram thereof.

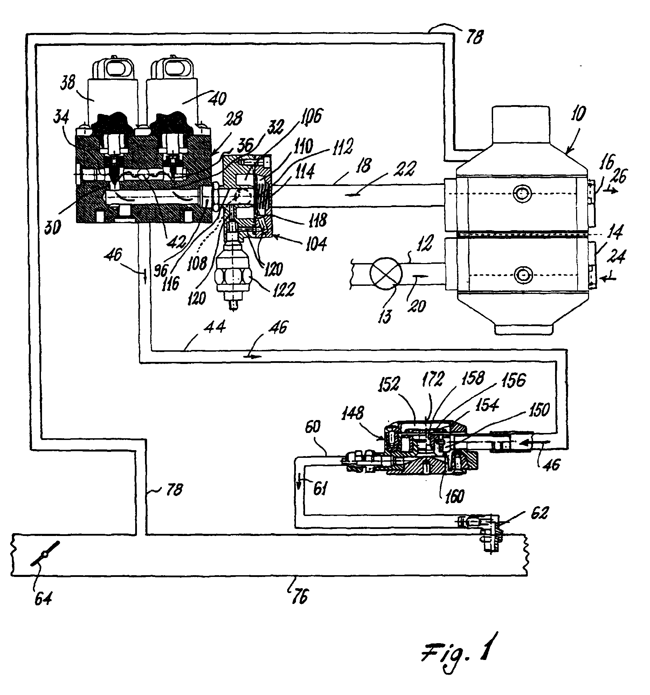

From Figure 1 it can be seen that the system comprises a positive pressure reducer 10 of known type, fed by a pipe 12 connected to a tank (not shown) containing a fuel gas such as methane, L.P.G. or biogas. The pipe 12 can contain a solenoid valve 13, preferably controlled by the control unit, to enable the tank to be shut off. The pressure reducer 10 is provided with an inlet 14 and an outlet 16 for the water circulated through it to regulate the gas temperature, so that the fuel gas leaving the pressure reducer via the pipe 18 is at constant temperature and pressure independently of the feed pressure. In the figure the arrows 20 and 22 indicate the direction of the gas fed to the reducer 10 and the direction of the gas leaving it respectively. The fuel gas, which is now at a lower pressure than that which it had in the tank, is fed via the pipe 18 and the cut-off valve 104 (described hereinafter) to the proportioning actuator 28. This latter, in the specific case illustrated, has two substantially different sized ports 30 and 32 provided in its body, both ports communicating with the pipe 18. A needle 34 and 36 respectively, of appropriate dimensions, can be inserted into each port 30, 32. The smaller port 32 and relative needle 36 enable the engine to be controlled for low loads, whereas the larger port 30 and relative needle 34 enable the engine to be controlled for high loads.

As already stated, the cross-sectional area of each needle 34, 36 varies along its length, to decrease towards its free end. In this specific case, an ogival profile has been chosen for the needles. Each needle can be moved coaxially to the relative port by a stepping motor, 38 and 40 respectively, operable by the control unit (not shown) on the basis of the engine operating conditions measured by said conventional operation sensors (in particular the throttle valve position sensor, the engine r.p.m. sensor, the lambda sensor, and the manifold pressure sensor). By means of the control unit it is therefore possible to define in the most appropriate manner the fuel quantity injected into the manifold branches, so as to achieve an air/gas mixture ratio which is as close as possible to stoichiometric.

The most convenient profile for the needles 34 and 36 can be determined as a result of experimental tests carried out on the specific engine. As already stated, in the specific case illustrated, an ogival profile is used for the needles 34 and 36.

The gas passing through the ports 30 and 32 emerges from the proportioning actuator 28 through the aperture 42, this latter communicating with the delivery duct 44. The gas flows through this latter in the direction of the arrows 46, to be fed to the single-membrane pressure regulator 148 to enter a first overall cylindrical circular chamber 150 connected to the duct 44 and separated from a second chamber 152 by an elastic membrane 154 carrying an enlargement 156 which acts as a valving element for a gas exit aperture 158, to close it when the membrane 154 is in its undeformed state (as in Figure 1). The second chamber 152 has the same lower diameter as the chamber 150 and communicates with the outside via a hole 172 provided in the casing of the pressure regulator 148. The gas exit aperture 158 communicates with the duct 60, which in Figure 1 is shown as a single duct for simplicity, whereas in reality it branches into a number of ducts equal to the number of cylinders, each of these ducts terminating in a respective injector 62 which injects the gas into a relative branch of the induction manifold 76.

The purpose of the pressure regulator 148 (which represents the aforesaid second means) is to ensure that the gas delivery pressure is close to atmospheric pressure in the first chamber 150 of the pressure regulator 148 and in the duct 44, and that this delivery pressure depends on the pressure in the manifold 76. Moreover, under these conditions any pressure variation in the manifold 76 influences the position of the valving element 156, in the sense that if vacuum decreases (ie the absolute pressure increases) in the manifold 76 so that the valving element 156 withdraws from the exit aperture 158, the gas passage area increases, and vice versa if the absolute pressure in the manifold 76 decreases.

In the body of the pressure regulator 148 there is provided a hole 160 of considerably smaller size than the cross-section of the delivery duct 44, this enabling the delivery duct to be directly connected to the induction manifold 76 via the pipe 60. This prevents sudden interruption of gas feed from the cut-off valve to the engine during re-acceleration

It is however apparent that instead of providing a single pressure regulator 148, a pressure regulator such as the regulator 148 can be provided for each cylinder. In that case the delivery duct 44 is divided into a number of branches equal to the number of cylinders, each branch terminating in a relative pressure regulator. This latter can conveniently be located directly on the corresponding manifold 76 to also act as an injector (so that the injector 62 will no longer be required).

Said third means consist of a so-called cut-off valve indicated overall by 104. The valve 104 allows proper management of sudden accelerator release and of closure of fuel gas feed to the engine. As can be seen from Figure 1, the valve 104 comprises a first chamber 106 connected to the gas feed pipe 18 via an aperture 108 (shown dashed in the figure) provided in the body of the valve 104. The first chamber 106 is separated from a second chamber 110 by an elastic membrane 112 on which a spring 114 acts to maintain the membrane 112 normally pressing against a mouth 116 to close it, this latter communicating with the feed inlet of the proportioning actuator 28.

A hole 118 is provided in the membrane 112. A by-pass 120 connects the second chamber 110 to the mouth 116. When commanded by the control unit, a solenoid valve 122 closes the by-pass 120.

With regard to the cut-off valve 104 (ie the third means), this handles sudden accelerator release (ie the so-called cut-off). In this respect, the control unit acts on the solenoid valve 122 to close the by-pass and interrupt gas flow to the proportioning actuator 28. In the first chamber 106 of the cut-off valve there is gas present which passes into the second chamber 110 via the hole 118. Consequently after a few moments the gas in the second chamber 110 attains the same pressure as the first chamber, so that the membrane 112, which was deformed to allow gas to pass through the outlet 116, returns to its undeformed position to close the outlet 116.

The cut-off valve 104 also handles feed shut-off when the engine is switched off. In this respect when the engine is switched off, the solenoid valve 122 closes. Hence by virtue of the hole 118 in the membrane 112 there is pressure equilibrium between the first chamber 106 and the second chamber 110 of the cut-off valve, so that the membrane 112 is in its undeformed position and closes the outlet 116.

When the engine is switched on, the control unit opens the solenoid valve 122, to hence connect the second chamber 110 of the cut-off valve 104 to the outlet 116. The pressure in the second chamber 110 consequently falls below that in the first chamber 106, so that the membrane 112 deforms to overcome the spring 113 and enable gas to be fed to the proportioning actuator 28.

As can be seen from Figure 1, in the pressure reducer 10 the reference pressure chambers are connected directly to the induction manifold 76 by the pipe 78. As already stated, this achieves a prompt dynamic response during acceleration transients.

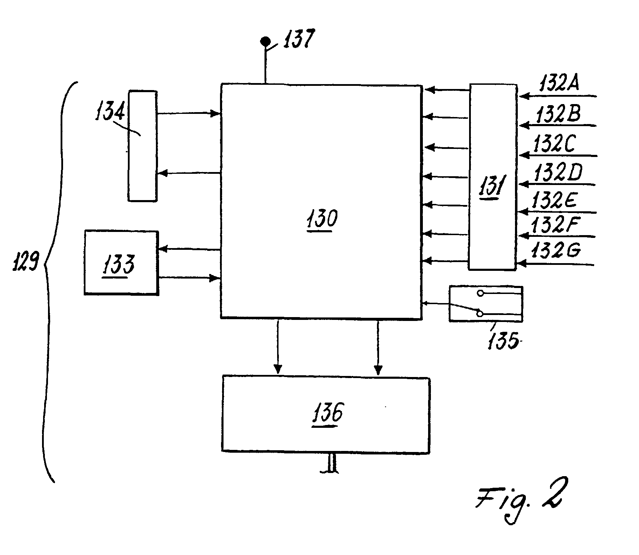

The control unit for the device is of conventional type, being substantially similar to those for petrol operation and will therefore not be described in detail. This control unit is shown schematically in Figure 2, in which it is indicated overall by 129, and comprises a microprocessor 130 connected to a filter stage 131 for the input signals 132A-G, to a non-volatile memory (EEPROM) 133, to an interface 134, to a gas-petrol change-over switch 135, to a power supply 137 and to an output gate 136.

The microprocessor 130, of conventional type, is arranged to generate at the output gate the signals used for controlling the motors 38, 40 and the solenoid valves 13, 122. The signals fed to the output gate 136 are generated on the basis of the input signals 132A-G. The input signals are a signal 132A relative to the pressure within the engine induction manifolds (for this purpose a usual pressure sensor is provided in the manifold 76), a signal 132B relative to the engine r.p.m. (the engine speed indicator signal can be used for this purpose), a signal 132C relative to the carburation stoichiometry (the signal sensed by a lambda probe can be used for this purpose), and a signal 132D relative to the position of the throttle valve (this is also a signal already generally available in motor vehicles).

The microprocessor can also advantageously receive an input signal 132E relative to the external air temperature, a signal 132F relative to the reducer exit gas temperature, and a signal 132G relative to the petrol injector adjustment.

The input signals are fed to a conventional filter stage 131 the purpose of which is to eliminate the undesirable components of the various signals. By virtue of the interface 134, also of conventional type, the microprocessor can be connected to a usual external personal computer to which information can be fed relative to the state of operation of the gas system and from which commands can be received for setting the various control parameters.

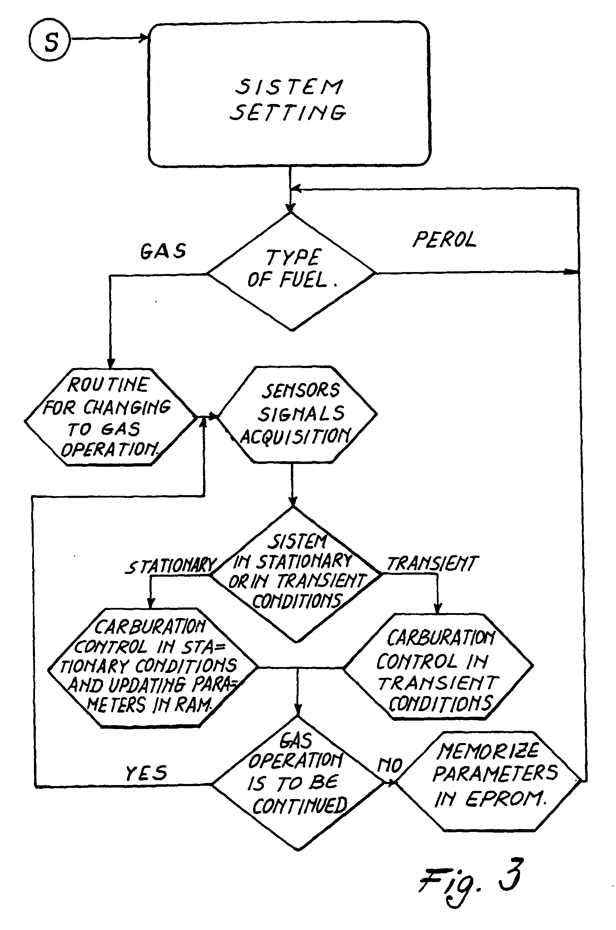

The operation of the microprocessor 130 is schematically illustrated in Figure 3, and is of type substantially similar to that of the control unit microprocessors of petrol engine injection control systems. In this respect, as in the case of such control systems, to determine the most suitable values for the output signals, the microprocessor utilizes a mapping system with self-learning, the map variables being the pressure within the induction manifolds and the engine r.p.m. On the basis of the current pressure and r.p.m. values, the map gives the control signal for the motors 38, 40.

The operations carried out during the microprocessor operating cycle comprise firstly the acquisition of the signals originating from the various sensors, this acquisition not being limited to merely reading the values provided by the analog-digital converter, but also implying signal filtering software. The execution of input signal filtering software programs is necessary because downstream of the filtering hardware section the signal can have noise components located within the filter pass band. The current engine operating conditions are then evaluated, ie whether the engine operating parameters are virtually identical to those evaluated within the preceding cycle (stationary operating conditions) or whether they are varying (transient conditions).

In the case of stationary conditions, the carburation correction is implemented in closed loop, by evaluating the signal from the lambda probe as the feedback signal and updating the map memorized in a RAM memory.

In the case of transient conditions, the system is controlled in open loop on the basis of the values previously memorized in the map.

On termination of the cycle a check is made to determine whether gas operation is to be continued or whether a return is to be made to petrol operation, to hence leave the control cycle. It is also determined whether the r.p.m. signal or the under-key (automobile running) is present, and the state of the gas-petrol change-over switch. If the system is to leave the control cycle, the characteristic carburation parameters are memorized in the non-volatile memory 133. On termination of the memorization stage, the system assumes a stand-by state awaiting return to the control cycle

The routine for passing to gas operation in the scheme of Figure 3 comprises opening the valve 13, positioning the motors in accordance with the value memorized in the map for the current r.p.m., opening the valve 122 and closing the petrol circuit.

As already stated, the control unit 129 can be a unit independent of that for petrol operation or can be integrated into this latter in a manner conventional to the expert of the art.

## Claims

1. A feed, implementation and control system for an internal combustion engine of the petrol injection type which can also be fed alternatively with fuel gas when required, comprising a feed/implementation unit and a control unit (129) arranged to receive signals (132A-G) from sensors which measure the engine operating conditions, the feed/implementation unit comprising:
- a pressure reducer (10) fed by the gas tank, of the two-stage type, provided with two reference chambers for the pressure in the induction manifold, and able to deliver gas at constant temperature and pressure independently of the feed pressure;
- a proportioning actuator (28) in which at least one communication port (30, 32) is provided between the outlet (22) of the pressure reducer (10) and the engine manifold (76) downstream of the throttle valve (64), first means (34, 36) controlled by the control unit (129) being able to adjust the passage area of each port (30, 32) on the basis of signals (132A-G) fed to the control unit by the sensors sensing the engine operating conditions, so as to feed the engine with an air/gas mixture ratio giving rise to reduced engine pollutant emissions;
- second means (148) for providing downstream of the proportioning actuator (28) a gas delivery pressure which depends on the pressure in the manifold (76) and is in any event close to atmospheric pressure;
- third means (104) for causing immediate cessation of gas flow to the manifold (76) in the case of sudden accelerator release, and for blocking gas flow when the engine is switched off.

2. A system as claimed in claim 1, wherein the proportioning actuator (28) has two ports (30, 32), one (30) of which is of considerably greater area than the other.

3. A system as claimed in claim 1, wherein the first means consist of a needle (34, 36) insertable into the relative port (30, 32), the cross-sectional area of the needle (34, 36) decreasing along it in the direction of the free end of the needle (34, 36), with each needle (34, 36) there being associated a means (38, 40) controlled by the control unit (129), to vary the insertion of the needle (34, 36) into the relative port (30, 32).

4. A system as claimed in claim 3, wherein the means for varying the insertion of the needle into the relative port is a stepping motor (38, 40).

5. A system as claimed in claim 3 or 4, wherein the profile of the needle (34, 36) is ogival.

6. A system as claimed in claims 1 to 5, wherein the second means comprise a single-membrane pressure regulator (148) in which a first overall cylindrical chamber (150) communicating with the delivery duct (44) is separated by an elastic membrane (154) from a second chamber (152) having substantially the same diameter as the first chamber (150) and communicating with the outside (172), the membrane (154) functioning as a valving element for the gas exit aperture (158) of the pressure regulator (148), to close this exit aperture when the membrane (154) is in its undeformed state

7. A system as claimed in claim 6, wherein a single-membrane pressure regulator (148) is provided for each cylinder.

8. A system as claimed in claim 7, wherein the pressure regulator (148) is positioned directly on the relative manifold (76), to also act as an injector.

9. A system as claimed in any one of claims 6 to 8, wherein the third means comprise a cut-off valve (104) arranged between the pressure reducer (10) and the proportioning actuator (28), and comprising a first chamber (106) communicating with the gas feed duct (22), the first chamber (106) being separated from a second chamber (110) by an elastic membrane (112) which, when in its undeformed state, prevents the first chamber (106) from communicating with the feed inlet (96) of the proportioning actuator (28), in the membrane (112) there being provided a hole (118), a by-pass (120) connecting the second chamber (110) to the feed inlet (96) of the proportioning actuator (28), there being connected into the by-pass a valve (122) controlled by the control unit (129).

10. A system as claimed in claim 1, wherein the reference pressure chambers of the pressure reducer (10) are connected to the induction manifold (76).

11. A system as claimed in claim 1, wherein the control unit (129) is an additional unit independent of the control unit for petrol operation.

12. A system as claimed in claim 1, wherein the control unit (129) governs both petrol operation and fuel gas operation.

13. A system as claimed in claim 10 or 11, wherein the control unit (129) is a microprocessor device (130).

14. A system as claimed in claim 6, wherein the body of the pressure regulator is provided with a hole of size considerably smaller than the cross-section of the delivery duct (44), and directly connecting this latter (44) to the induction manifold (76).
